(19) Europäisches Patentamt / European Patent Office / Office européen des brevets

(11) **EP 3 024 790 B1**

(12) **EUROPEAN PATENT SPECIFICATION**

(45) Date of publication and mention
of the grant of the patent:
**12.05.2021 Bulletin 2021/19**

(21) Application number: **14742199.4**

(22) Date of filing: **18.07.2014**

(51) Int Cl.:
*C03C 3/091* (2006.01)      *C03C 4/02* (2006.01)
*C03C 4/10* (2006.01)

(86) International application number:
**PCT/EP2014/065483**

(87) International publication number:
**WO 2015/011040 (29.01.2015 Gazette 2015/04)**

(54) **HIGH INFRARED TRANSMISSION GLASS SHEET**

GLASSCHEIBE MIT HOHER INFRAROTSTRAHLENDURCHLÄSSIGKEIT

PLAQUE DE VERRE À TRANSMISSION ÉLEVÉE DES INFRAROUGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2013 EP 13177772**

(43) Date of publication of application:
**01.06.2016 Bulletin 2016/22**

(73) Proprietors:
• **AGC Glass Europe**
 **1348 Louvain-La-Neuve (BE)**
• **Asahi Glass Company, Limited**
 **Chiyoda-ku**
 **Tokyo 100-8405 (JP)**

(72) Inventors:
• **LAMBRICHT, Thomas**
 **B-1360 Perwez (BE)**
• **DOGIMONT, Audrey**
 **B-1495 Sart Dames Avelines (BE)**

(74) Representative: **AGC Glass Europe**
**Technovation Centre**
**Intellectual Property Department**
**Rue Louis Blériot 12**
**6041 Gosselies (BE)**

(56) References cited:
**WO-A1-2012/128180      WO-A1-2013/021975
DE-A1-102009 056 757    US-A- 2 599 349
US-A- 4 379 851          US-A- 4 526 872
US-A- 5 670 433          US-A1- 2004 121 896
US-A1- 2007 161 492      US-A1- 2013 098 903**

EP 3 024 790 B1

**Description**

**1. Field of the Invention**

The present invention relates to the use of a glass sheet with high infrared transmission."
in a device using infrared radiation propagating essentially inside said sheet.
Because of its high infrared (IR) transmission, the glass sheet can in fact be used advantageously in a touchscreen or touch panel or touchpad, for example, using optical technology called planar scatter detection (PSD) or frustrated total internal reflection (FTIR) (or any other technology that requires a high IR transmission) to detect the position of one or more objects (e.g. a finger or a stylus) on a surface of said sheet.
Consequently, the invention also relates to a touchscreen, a touch panel or a touchpad comprising such a glass sheet.

**2. Solutions of the Prior Art**

PSD and FTIR technologies allow multiple detection touchscreens/panels to be obtained that are inexpensive and that can have a relatively significant touch-sensitive surface (for example, 3 to 100 inches) while also having a low thickness.
These two technologies involve:

(i) injection of infrared radiation (IR) by means of LEDs, for example, into an infrared transparent substrate from one or several edges/sides;
(ii) propagation of the infrared radiation inside said substrate (which thus acts as waveguide) by means of an optical phenomenon of total internal reflection (no radiation "exits" from the substrate);
(iii) contact of the surface of the substrate with any object (for example, a finger or stylus) causing a local disturbance by diffusion of the radiation in all directions; some of the deviated rays will thus be able to "exit" from the substrate.

In FTIR technology the deviated rays form an infrared light point on the inside surface of the substrate opposite the touch sensitive surface. These are seen by a special camera located below the device.
PSD technology itself involves two additional steps to the list of steps (i)-(iii):

(iv) analysis of the resulting IR radiation at the level of the edge of the substrate by a detector; and
(v) calculation by algorithms of the position(s) of the object(s) in contact with the surface from the radiation detected. This technology is disclosed in particular in document US 2013/021300 A1.

Basically, glass is a material of choice for touch panels because of its mechanical properties, its durability, its scratch resistance, its optical clarity and because it can be chemically or thermally strengthened.
In the case of glass panels used for PSD or FTIR technologies with a very substantial surface area and therefore with a relatively large length/width, the optical path of the injected IR radiation is long. In this case, the absorption of the IR radiation by the material of the glass thus has a significant effect on the sensitivity of the touch panel, which can then decrease undesirably in the length/width of the panel. In the case of glass panels used for PSD or FTIR technology with a smaller surface area and therefore with a shorter optical path of the injected IR radiation, the absorption of the IR radiation by the material of the glass also has an effect particularly on the energy consumption of the device into which the glass panel is integrated.
Therefore, a glass sheet that is highly transparent to infrared radiation is of great use in this context in order to guarantee an unimpaired or sufficient sensitivity over the whole of the touch sensitive surface when this surface is substantial. In particular, a glass sheet that has the lowest possible absorption coefficient at the wavelength of 1050 nm generally used in these technologies is desired.
To obtain a high infrared transmission (as well as transmission in the visible) it is known to reduce the total iron content in the glass (expressed in terms of $Fe_2O_3$ according to standard practice in the field) to obtain low-iron glasses. Silicate-based glasses always contain iron as this is present as an impurity in numerous raw materials used (and in particular sand). Iron exists in the structure of glass in the form of ferric irons $Fe^{3+}$ and ferrous ions $Fe^{2+}$. The presence of ferric ions $Fe^{3+}$ gives the glass a slight absorption of low wavelength visible light and a higher absorption in the near ultraviolet (absorption band centred on 380 nm), while the presence of ferrous ions $Fe^{2+}$ (sometimes expressed as oxide FeO) causes a high absorption in the near infrared (absorption band centred on 1050 nm). Thus, the increase in the total iron content (in its two forms) accentuates the absorption in the visible and the infrared. Moreover, a high concentration of ferrous ions $Fe^{2+}$ causes a decrease in the transmission in the infrared (in particular the near infrared). However, to obtain an absorption coefficient at wavelength 1050 nm that is sufficiently low for touch sensitive applications solely by acting on the total iron content, such a significant decrease in the total iron content would be required that (i) either it would incur production costs that are much too high as a result of the need for very pure raw materials (which sometimes do not even exist in sufficiently pure state), (ii) or this would pose production problems (in particular premature wear of the furnace and/or difficulties in heating the glass in the furnace).

To further increase the transmission of the glass, it is also known to oxidise the iron present in the glass, i.e. to reduce the content of ferrous ions in favour of the content of ferric ions. The degree of oxidation of a glass is given by its redox defined as the atomic weight ratio of $Fe^{2+}$ in relation to the total weight of the iron atoms present in the glass, $Fe^{2+}$/total Fe.

In order to reduce the redox of the glass it is known to add an oxidising component to the batch of raw materials. However, the majority of known oxidising agents (sulphates, nitrates ...) do not have a sufficiently high oxidising power to obtain the IR transmission values sought for application to touch panels using FTIR or PSD technology or must be added in too high a quantity with collateral disadvantages such as cost, colouration, incompatibility with the production process etc..

## 3. Objectives of the Invention

The objective of the invention is as defined in claim 1 and dependent claims thereof.

Another disclosure is to provide a glass sheet which, when used as touch sensitive surface in touchscreens, touch panels or touchpads of large dimension, does not cause any loss of sensitivity of the touch sensitive function, or if so very little.

Another disclosure is to provide a glass sheet which, when used as touch sensitive surface in touchscreens, touch panels or touchpads of more moderate dimensions, is beneficial to the energy consumption of the device.

Another disclosure is to provide a glass sheet with a high infrared transmission and with an acceptable aesthetic appearance for the chosen application.

Finally, another disclosure is also to provide a glass sheet with a high infrared transmission that is inexpensive to produce.

## 4. Outline of the Invention

The glass sheet used in a device using infrared radiation has a composition that comprises in a content expressed in percentages of the total weight of the glass:

$78 < SiO_2 \leq 85\%$
$0 \leq Al_2O_3 \leq 30\%$
$0 \leq B_2O_3 \leq 20\%$
$0 \leq Na_2O \leq 25\%$
$0 \leq CaO \leq 20\%$
$0 \leq MgO \leq 15\%$
$0 \leq K_2O \leq 20\%$
$0 \leq BaO \leq 20\%$
$0.002 \leq$ total iron (expressed in the form of $Fe_2O_3$) $\leq 0.06\%$ , wherein it comprises a chromium content of $0.0001\% \leq Cr_2O_3 \leq 0.06\%$ and an $Fe^{2+}$ content (expressed in the form of FeO) of less than 10ppm. in a percentage of the total weight of glass.

Thus, the invention is based on a completely novel and inventive approach since it enables the posed technical problem to be solved. It involves the use of a highly IR transparent glass sheet without too negative an impact on its aesthetic appearance, its colour, by combining in a glass composition a low content of iron and of chromium, especially known as a powerful colouring agent in so-called "selective" coloured glasses, in a specific content range.

In the whole of the present text, when a range is indicated all the whole and subdomain values in the numerical range are expressly included as if explicitly stated. Likewise, in the whole of the present text, unless explicitly mentioned, the percentage content values are weight values expressed in relation to the total weight of the glass.

Other features and advantages of the invention will become clearer on reading the following description.

In the sense of the invention glass is understood to mean a material that is completely amorphous, and thus excludes any crystalline material, even partially (such as vitrocrystalline or glass ceramic materials, for example).

The glass sheet according to the invention can be a glass sheet obtained by a float, drawing or laminating process or any other known process for fabricating a glass sheet from a molten glass composition.

According to the invention different raw materials containing chromium can be used to introduce chromium into the glass composition. In particular, chromium oxides, CrO, $Cr_2O_3$, $CrO_2$ or $CrO_3$ are possible, and relatively pure, sources of chromium. Other substances that are rich in chromium can also be used such as chromates, chromites and any other chromium-based chemical compound. However, compounds containing chromium in its 6+ form are less preferred for reasons of safety.

The glass sheet according to the invention can have various and relatively significant dimensions. For example, it can have dimensions ranging up to 3.21 m x 6 m or 3.21 m x 5.50 m or 3.21 m x 5.10 m or 3.21 m x 4.50 m (referred to as a PLF glass sheet) or also, for example, 3.21 m x 2.55 m or 3.21 m x 2.25 m (referred to as a DLF glass sheet).

The glass sheet according to the invention can have a thickness in the range of between 0.05 and 25 mm. Advantageously, in the case of the application for touch panels, the glass sheet according to the invention can have a thickness varying between 0.1 and 6 mm. For reasons of weight in the case of the application for touch panels, the thickness of the glass sheet according to the invention is preferably 0.1 to 2.2 mm.

According to the invention the composition of the invention has a content of total iron such as: $0.002 \leq$ total iron (expressed in the form of $Fe_2O_3$) $\leq 0.06\%$. A content of total iron (expressed in the form of $Fe_2O_3$) of less than or equal to 0.06% by weight enables the IR transmission of the glass sheet to be increased further. The minimum value means that the cost of the glass will not be disadvantaged too much, since such low iron values often require costly very pure raw materials or the purification of raw materials. The composition preferably has a content of total iron (expressed in the form of $Fe_2O_3$) ranging from 0.002 to 0.04% by weight in relation to the total weight of the glass. Particularly preferred, the composition has a content of total iron (expressed in the form of $Fe_2O_3$) ranging from 0.002 to 0.02% by weight in relation to the total weight of the glass.

According to a particularly advantageous embodiment of the invention the composition has a chromium content such as: $0.0005\% \leq Cr_2O_3 \leq 0.06\%$. Particularly preferred, the composition of the invention has a chromium content such as: $0.001\% \leq Cr_2O_3 \leq 0.06\%$. Even more preferred, the composition of the invention has a chromium content such as: $0.002\% \leq Cr_2O_3 \leq 0.06\%$. Such minimum values of chromium contents enable a further improved transmission in the IR to be obtained.

According to an advantageous embodiment of the invention the composition has a chromium content (expressed in the form of $Cr_2O_3$) such as: $0.0001\% \leq Cr_2O_3 \leq 0.03\%$ or even better such as $0.001\% \leq Cr_2O_3 \leq 0.03\%$ and preferably such as $0.002\% \leq Cr_2O_3 \leq 0.03\%$. Such ranges of chromium contents enable a significant transmission in the IR to be obtained without too negative an impact on the aesthetic appearance of the glass sheet. Even more preferred, the composition of the invention has a chromium content such as: $0.0001\% \leq Cr_2O_3 \leq 0.02\%$ or even better such as $0.001\% \leq Cr_2O_3 \leq 0.02\%$ and preferably such as $0.002\% \leq Cr_2O_3 \leq 0.02\%$.

According to another embodiment of the invention the composition has a content of $Al_2O_3$ expressed as a percentage in total weight of the glass such as: $0 \leq Al_2O_3 \leq 18\%$.

According to another embodiment of the invention, which can be considered in combination with the preceding embodiment, the composition has a content of BaO expressed as a percentage in total weight of the glass such as: $0 \leq BaO \leq 5\%$. The composition has a content of $Fe^{2+}$ (expressed in the form of FeO) of less than 10 ppm. Particularly preferred, the composition has a content of $Fe^{2+}$ (expressed in the form of FeO) of less than 5 ppm.

According to the invention the glass sheet has a high IR transmission. More precisely, the glass sheet of the present invention has a high transmission of radiation in the near infrared. To quantify the high transmission of the glass in the infrared range, the absorption coefficient at the wavelength 1050 nm, which should thus be as low as possible in order to obtain a high transmission, will be used in the present description. The absorption coefficient is defined by the relation between the absorbance and the length of the optical path covered by an electromagnetic radiation in a given medium. It is expressed in $m^{-1}$. It is therefore independent of the thickness of the material, but depends on the wavelength of the absorbed radiation and the chemical nature of the material.

In the case of glass the absorption coefficient ($\mu$) at a chosen wavelength $\lambda$ can be calculated from a measurement in transmission (T) as well as the refractive index n of the material (thick = thickness), wherein the values of n, p and T are a function of the chosen wavelength $\lambda$:

$$\mu = -\frac{1}{thick} \cdot ln\left[\frac{-(1-\rho)^2 + \sqrt{(1-\rho)^4 + 4.T^2.\rho^2}}{2.T.\rho^2}\right]$$

where p = $(n-1)^2/(n+1)^2$.

Advantageously, the glass sheet according to the invention has an absorption coefficient at wavelength 1050 nm of less than or equal to 5 $m^{-1}$. Preferably, the glass sheet according to the invention has an absorption coefficient at wavelength 1050 nm of less than or equal to 3.5 $m^{-1}$. Particularly preferred, the glass sheet according to the invention has an absorption coefficient at wavelength 1050 nm of less than or equal to 2 $m^{-1}$. Even more preferred, the glass sheet according to the invention has an absorption coefficient at wavelength 1050 nm of less than or equal to 1 $m^{-1}$.

Advantageously, the glass sheet according to the invention has an absorption coefficient at wavelength 950 nm of less than or equal to 5 m$^{-1}$. Preferably, the glass sheet according to the invention has an absorption coefficient at wavelength 950 nm of less than or equal to 3.5 m$^{-1}$. Particularly preferred, the glass sheet according to the invention has an absorption coefficient at wavelength 950 nm of less than or equal to 2 m$^{-1}$. Even more preferred, the glass sheet according to the invention has an absorption coefficient at wavelength 950 nm of less than or equal to 1 m$^{-1}$.

Advantageously, the glass sheet according to the invention has an absorption coefficient at wavelength 850 nm of less than or equal to 5 m$^{-1}$. Preferably, the glass sheet according to the invention has an absorption coefficient at wavelength 850 nm of less than or equal to 3.5 m$^{-1}$. Particularly preferred, the glass sheet according to the invention has an absorption coefficient at wavelength 850 nm of less than or equal to 2 m$^{-1}$. Even more preferred, the glass sheet according to the invention has an absorption coefficient at wavelength 850 nm of less than or equal to 1 m$^{-1}$.

According to an embodiment of the invention, in addition to the impurities contained in particular in the raw materials, the composition of the glass sheet can comprise a small proportion of additives (such as agents aiding the melting or refining of the glass) or elements originating from the dissolution of the refractory materials forming the melting furnaces.

According to an embodiment of the invention the composition of the glass sheet can additionally comprise one or more colouring agents in a quantity adjusted as a function of the sought effect. This(these) colouring agent(s) can serve, for example, to "neutralise" the colour generated by the presence of the chromium and thus make the colouration of the glass of the invention more neutral, colourless. Alternatively, this(these) colouring agent(s) can serve to obtain a desired colour other than that generated by the presence of the chromium.

According to another advantageous embodiment of the invention that may be combined with the preceding embodiment, the glass sheet can be coated with a layer or a film that enables the colour that can be generated by the presence of chromium to be modified or neutralised (e.g. a film of coloured PVB).

The glass sheet according to the invention can advantageously be chemically or thermally toughened.

According to an embodiment of the invention the glass sheet is coated with at least one thin electrically conductive transparent layer. A thin electrically conductive transparent layer according to the invention can be, for example, a layer based on SnO$_2$:F, SnO$_2$:Sb or ITO (indium tin oxide), ZnO:Al or also ZnO:Ga.

According to another advantageous embodiment of the invention the glass sheet is coated with at least one antireflective (or antiglare) layer. This embodiment is clearly advantageous when the glass sheet of the invention is used as the front face of a screen. An antireflective layer according to the invention can be, for example, a layer based on porous silica with a low refractive index or can be formed from several layers (stack), in particular a stack of layers of dielectric material alternating layers of low and high refractive index and terminating with a layer of low refractive index.

According to another embodiment the glass sheet is coated with at least one anti-fingerprint layer in order to reduce/prevent fingerprints from showing. This embodiment is also advantageous in the case where the glass sheet of the invention is used as the front face of a touch screen. Such a layer can be combined with a thin electrically conductive transparent deposited on the opposite face. Such a layer can be combined with an antireflective layer deposited on the same face, wherein the anti-fingerprint layer is on the outside of the stack and thus covers the antireflective layer.

The glass sheet according to the invention can also be treated on at least one of its main faces, for example, using an acid or base delustering process in order to generate anti-fingerprint properties, for example, or also antiglare or anti-sparkling properties. This is also advantageous in particular in the case of the glass sheet of the invention being used as touch sensitive surface/screen.

Depending on the desired applications and/or properties, other layer(s) / other treatments can be deposited / conducted on one face and/or the other of the glass sheet according to the invention.

In addition, the invention also relates to a screen or panel or pad comprising at least one glass sheet according to the invention, wherein said glass sheet defines a touch sensitive surface. The touchscreen or panel or pad preferably uses FTIR or PSD optical technology. In particular, the glass sheet is advantageously mounted on top of a display surface.

Finally, the invention relates to the use of a glass sheet having a composition that comprises the following in a content expressed in percentages of the total weight of glass:

$78 < SiO_2 \leq 85\%$
$0 \leq Al_2O_3 \leq 30\%$
$0 \leq B_2O_3 \leq 20\%$
$0 \leq Na_2O \leq 25\%$
$0 \leq CaO \leq 20\%$
$0 \leq MgO \leq 15\%$
$0 \leq K_2O \leq 20\%$
$0 \leq BaO \leq 20\%$
$0.002 \leq$ total iron (expressed in the form of Fe$_2$O$_3$) $\leq 0.06\%$
$0.0001\% \leq Cr_2O_3 \leq 0.06\%$ and Fe2+ (expressed in the form of FeO) of less than 10ppm.

in a device using an infrared radiation that propagates essentially inside said sheet. The term radiation that propagates essentially inside the sheet is understood to mean a radiation that travels in the bulk of the glass sheet between the two main faces of the sheet.

Advantageously, according to an embodiment of the use of the invention the propagation of the infrared radiation occurs by total internal reflection. According to this embodiment the infrared radiation can be injected inside the glass sheet from one or more sides of said sheet. Side of the sheet is understood to be each of the four surfaces defined by the thickness of the sheet and substantially perpendicular to the two main faces of the sheet. Alternatively, still according to this embodiment, the infrared radiation can be injected inside the glass sheet from one or both of the main faces at a certain angle.

According to a particularly advantageous embodiment of the use of the invention the composition has a chromium content such as: $0.0005\% \leq Cr_2O_3 \leq 0.06\%$. Particularly preferred, the composition has a chromium content such as: $0.001\% \leq Cr_2O_3 \leq 0.06\%$. Even more preferred, the composition of the invention has a chromium content such as: $0.002\% \leq Cr_2O_3 \leq 0.06\%$.

According to an advantageous embodiment of the use of the invention the composition has a chromium content (expressed in the form of $Cr_2O_3$) such as: $0.0001\% \leq Cr_2O_3 \leq 0.03\%$ or even better such as $0.001\% \leq Cr_2O_3 \leq 0.03\%$ and still more preferred such as: $0.002\% \leq Cr_2O_3 \leq 0.03\%$. Such ranges of chromium contents enable a significant transmission in the IR to be obtained without too negative an impact on the aesthetic appearance of the glass sheet. Even more preferred, the composition of the invention has a chromium content such as: $0.0001\% \leq Cr_2O_3 \leq 0.02\%$ or even better such as $0.001\% \leq Cr_2O_3 \leq 0.02\%$ and preferably such as $0.002\% \leq Cr_2O_3 \leq 0.02\%$.

According to another embodiment of the use of the invention the composition has a content of $Al_2O_3$, expressed as a percentage in total weight of the glass, such as: $0 \leq Al_2O_3 \leq 18\%$.

According to another embodiment of the use of the invention, which can be considered in combination with the preceding embodiment, the composition has a content of BaO, expressed as a percentage in total weight of the glass, such as: $0 \leq BaO \leq 5\%$.

According to another embodiment of the use according to the invention the composition advantageously has a content of total iron (expressed in the form of $Fe_2O_3$) of 0.002 to 0.04% by weight in relation to the total weight of the glass, and preferably a content of total iron (expressed in the form of $Fe_2O_3$) of 0.002 to 0.02% by weight in relation to the total weight of the glass.

The following examples illustrate the invention without intention of limiting its coverage in any way.

## Examples

The raw materials were mixed in powder form and placed in a melting pot in accordance with the composition specified in the table below.

| Composition | Content [% by weight] |
| --- | --- |
| $SiO_2$ | 80 |
| $B_2O_3$ | 13 |
| $K_2O$ | 1.2 |
| $Na_2O$ | 3.5 |
| $Al_2O_3$ | 2.3 |
| $Fe_2O_3$ total | 0.01 |
| $Cr_2O_3$ | 0.005 |

The optical properties of the glass sample in sheet form were determined and in particular the absorption coefficient at wavelengths of 1050, 950 and 850 nm was determined by a transmission measurement on a Perkin Elmer lambda 950 spectrophotometer fitted with an integrating sphere 150 mm in diameter, the sample being placed at the inlet port of the sphere for the measurement. These same measurements were also conducted on a reference (comparative) sample of the same base composition without added chromium.

The table below shows the absorption coefficients at wavelengths 1050, 950 and 850 nm obtained for the sample with chromium according to the invention and for the reference.

| Sample | ppm of chromium (expressed in the form of $Cr_2O_3$) | ppm of iron (expressed in the form of $Fe_2O_3$) | Absorption coefficient at 1050 nm (m$^{-1}$) | Absorption coefficient at 950 nm (m$^{-1}$) | Absorption coefficient at 850 nm (m$^{-1}$) |
|---|---|---|---|---|---|
| Reference | 0 (no addition) | 100 | 2.9 | 2.9 | 3.1 |
| Invention | 50 | 100 | ~0 | 0.1 | 0.9 |

These results show that the addition of chromium in a range of contents according to the invention enables the absorption coefficient at the wavelengths of 1050, 950 and 850 nm to be significantly decreased, and therefore in general enables the absorption of radiation in the near infrared to be reduced.

If the quantity of total iron is lower than that of the example according to the invention (for example, 80 or 70 ppm), the quantity of chromium necessary to obtain equivalent values for the absorption coefficient should be lower. Conversely, if the quantity of total iron is higher than that of the example according to the invention (for example, 130 or 150 ppm), the quantity of chromium necessary to obtain equivalent values for the absorption coefficient should be higher.

**Claims**

1.  Use of a glass sheet in a device using an infrared radiation that propagates essentially inside said sheet, the glass sheet having a composition that comprises the following in a content expressed in percentages of the total weight of glass:

    $78 < SiO_2 \leq 85\%$
    $0 \leq Al_2O_3 \leq 30\%$
    $0 \leq B_2O_3 \leq 20\%$
    $0 \leq Na_2O \leq 25\%$
    $0 \leq CaO \leq 20\%$
    $0 \leq MgO \leq 15\%$
    $0 \leq K_2O \leq 20\%$
    $0 \leq BaO \leq 20\%$
    $0.002 \leq$ total iron (expressed in the form of $Fe_2O_3$) $\leq 0.06\%$,

    **characterised in that** said composition comprises a chromium content such as : $0.0001\% \leq Cr_2O_3 \leq 0.06\%$, expressed in a percentage of the total weight of glass, has a content of $Fe^{2+}$ (expressed in the form of FeO) of less than 10 ppm and has an absorption coefficient at wavelength 1050 nm of less than or equal to 2 m$^{-1}$.

2.  Use of a glass sheet according to the preceding claim, **characterised in that** the composition has a chromium content such as: $0.0005\% \leq Cr_2O_3 \leq 0.06\%$.

3.  Use of a glass sheet according to the preceding claim, **characterised in that** the composition has a chromium content such as: $0.001\% \leq Cr_2O_3 \leq 0.06\%$.

4.  Use of a glass sheet according to the preceding claim, **characterised in that** the composition has a chromium content such as: $0.002\% \leq Cr_2O_3 \leq 0.06\%$.

5.  Use of a glass sheet according to one of the preceding claims, **characterised in that** the composition has a content of total iron (expressed in the form of **$Fe_2O_3$)** of 0.002 to 0.04% weight in relation to the total weight of the glass.

6.  Use of a glass sheet according to the preceding claim, **characterised in that** the composition has a content of total iron (expressed in the form of $Fe_2O_3$) of 0.002 to 0.02% weight in relation to the total weight of the glass.

7.  Use of a glass sheet according to one of the preceding claims, **characterised in that** the composition has a content of $Al_2O_3$ expressed in a percentage of the total weight of the glass such as $0 \leq Al_2O_3 \leq 18\%$.

8.  Use of a glass sheet according to one of the preceding claims, **characterised in that** the composition has a content of BaO expressed in a percentage of the total weight of the glass such as $0 \leq BaO \leq 5\%$.

9. Use according to the preceding claims, **characterised in that** the propagation of the infrared radiation occurs by total internal reflection.

## Patentansprüche

1. Verwendung einer Glasscheibe in einer Vorrichtung, bei der eine sich im Wesentlichen innerhalb der Scheibe ausbreitende Infrarotstrahlung eingesetzt wird, wobei die Glasscheibe eine Zusammensetzung aufweist, die Folgendes in einem Gehalt, ausgedrückt in Prozent des Glasgesamtgewichts, umfasst:

$78 < SiO_2 \leq 85\%$
$0 \leq Al_2O_3 \leq 30\%$
$0 \leq B_2O_3 \leq 20\%$
$0 \leq Na_2O \leq 25\%$
$0 \leq CaO \leq 20\%$
$0 \leq MgO \leq 15\%$
$0 \leq K_2O \leq 20\%$
$0 \leq BaO \leq 20\%$
$0,002 \leq$ Gesamteisen (ausgedrückt in Form von $Fe_2O_3$) $\leq 0,06\%$,

**dadurch gekennzeichnet, dass** die Zusammensetzung einen Chromgehalt wie: $0,0001\% \leq Cr_2O_3 \leq 0,06\%$, ausgedrückt in Prozent des Glasgesamtgewichts, umfasst, einen $Fe^{2+}$-Gehalt (ausgedrückt in Form von FeO) von weniger als 10 ppm aufweist und bei einer Wellenlänge von 1050 nm einen Absorptionskoeffizienten von kleiner oder gleich 2 m$^{-1}$ aufweist.

2. Verwendung einer Glasscheibe nach dem vorhergehenden Anspruch, **dadurch gekennzeichnet, dass** die Zusammensetzung einen Chromgehalt wie: $0,0005\% \leq Cr_2O_3 \leq 0,06\%$ aufweist.

3. Verwendung einer Glasscheibe nach dem vorhergehenden Anspruch, **dadurch gekennzeichnet, dass** die Zusammensetzung einen Chromgehalt wie: $0,001\% \leq Cr_2O_3 \leq 0,06\%$ aufweist.

4. Verwendung einer Glasscheibe nach dem vorhergehenden Anspruch, **dadurch gekennzeichnet, dass** die Zusammensetzung einen Chromgehalt wie: $0,002\% \leq Cr_2O_3 \leq 0,06\%$ aufweist.

5. Verwendung einer Glasscheibe nach einem der vorhergehenden Ansprüche, **dadurch gekennzeichnet, dass** die Zusammensetzung einen Gesamteisengehalt (ausgedrückt in Form von $Fe_2O_3$) von 0,002 bis 0,04 Gewichts-%, bezogen auf das Glasgesamtgewicht, aufweist.

6. Verwendung einer Glasscheibe nach einem der vorhergehenden Ansprüche, **dadurch gekennzeichnet, dass** die Zusammensetzung einen Gesamteisengehalt (ausgedrückt in Form von $Fe_2O_3$) von 0,002 bis 0,02 Gewichts-%, bezogen auf das Glasgesamtgewicht, aufweist.

7. Verwendung einer Glasscheibe nach einem der vorhergehenden Ansprüche, **dadurch gekennzeichnet, dass** die Zusammensetzung einen $Al_2O_3$-Gehalt, ausgedrückt in Prozent des Glasgesamtgewichts, wie $0 \leq Al_2O_3 \leq 18\%$ aufweist.

8. Verwendung einer Glasscheibe nach einem der vorhergehenden Ansprüche, **dadurch gekennzeichnet, dass** die Zusammensetzung einen BaO-Gehalt, ausgedrückt in Prozent des Glasgesamtgewichts, wie $0 \leq BaO \leq 5\%$ aufweist.

9. Verwendung nach dem vorhergehenden Anspruch, **dadurch gekennzeichnet, dass** die Ausbreitung der Infrarotstrahlung durch Totalreflexion erfolgt.

## Revendications

1. Utilisation d'une feuille de verre dans un dispositif utilisant un rayonnement infrarouge qui se propage essentiellement à l'intérieur de ladite feuille, la feuille de verre possédant une composition qui comprend ce qui suit en une teneur exprimée en pourcentages du poids total de verre :

$78 < SiO_2 \leq 85$ %
$0 \leq Al_2O_3 \leq 30$ %
$0 \leq B_2O_3 \leq 20$ %
$0 \leq Na_2O \leq 25$ %
$0 \leq CaO \leq 20$ %
$0 \leq MgO \leq 15$ %
$0 \leq K_2O \leq 20$ %
$0 \leq BaO \leq 20$ %
$0,002 \leq$ fer total (exprimée sous la forme de $Fe_2O_3$) $\leq 0,06$ %,

**caractérisée en ce que** ladite composition comprend une teneur en chrome telle que : $0,0001$ % $\leq Cr_2O_3 \leq 0,06$ %, exprimée en un pourcentage du poids total de verre, possède une teneur en $Fe^{2+}$ (exprimée sous la forme de FeO) de moins de 10 ppm et possède un coefficient d'absorption, à la longueur d'onde de 1050 nm, inférieur ou égal à 2 $m^{-1}$.

2. Utilisation d'une feuille de verre selon la revendication précédente, **caractérisée en ce que** la composition possède une teneur en chrome telle que : $0,0005$ % $\leq Cr_2O_3 \leq 0,06$ %.

3. Utilisation d'une feuille de verre selon la revendication précédente, **caractérisée en ce que** la composition possède une teneur en chrome telle que : $0,001$ % $\leq Cr_2O_3 \leq 0,06$ %.

4. Utilisation d'une feuille de verre selon la revendication précédente, **caractérisée en ce que** la composition possède une teneur en chrome telle que : $0,002$ % $\leq Cr_2O_3 \leq 0,06$ %.

5. Utilisation d'une feuille de verre selon l'une des revendications précédentes, **caractérisée en ce que** la composition possède une teneur en fer total (exprimée sous la forme de $Fe_2O_3$) de 0,002 à 0,04 % en poids par rapport au poids total du verre.

6. Utilisation d'une feuille de verre selon la revendication précédente, **caractérisée en ce que** la composition possède une teneur en fer total (exprimée sous la forme de $Fe_2O_3$) de 0,002 à 0,02 % en poids par rapport au poids total du verre.

7. Utilisation d'une feuille de verre selon l'une des revendications précédentes, **caractérisée en ce que** la composition possède une teneur en $Al_2O_3$ exprimée en un pourcentage du poids total du verre telle que $0 \leq Al_2O_3 \leq 18$ %.

8. Utilisation d'une feuille de verre selon l'une des revendications précédentes, **caractérisée en ce que** la composition possède une teneur en BaO exprimée en un pourcentage du poids total du verre telle que $0 \leq BaO \leq 5$ %.

9. Utilisation selon les revendications précédentes, **caractérisée en ce que** la propagation du rayonnement infrarouge a lieu par réflexion interne totale.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013021300 A1